# FASCICULE DE BREVET EUROPEEN

(11) **EP 3 811 586 B1**
(45) Date de publication et mention de la délivrance du brevet: **27.07.2022**
(21) Numéro de dépôt: 19737846.6
(22) Date de dépôt: 05.06.2019
(51) Int. Cl.: H04L 67/12

(54) **SEGMENT DE RÉSEAU DE COMMUNICATION D'UN VÉHICULE TERRESTRE À MOTEUR ET VÉHICULE TERRESTRE À MOTEUR ASSOCIÉ**
SEGMENT EINES KOMMUNIKATIONSNETZES EINES MOTORLANDFAHRZEUGES UND ZUGEHÖRIGES MOTORLANDFAHRZEUG
SEGMENT OF A COMMUNICATION NETWORK OF A LAND MOTOR VEHICLE, AND ASSOCIATED LAND MOTOR VEHICLE

(30) Priorité: 21.06.2018 FR 1855509
(43) Date de publication de la demande: 28.04.2021
(73) Titulaire: PSA Automobiles SA, 78300 Poissy (FR)
(72) Inventeur: DHAINAUT, Jean Marc, 75007 PARIS (FR)
(86) Numéro de dépôt international: PCT/FR2019/051335
(87) Numéro de publication internationale: WO 2019/243698

(56) Documents cités:
- EP-A1- 3 114 817
- EP-A1- 3 148 236
- US-A1- 2018 026 945

## Description

La présente invention concerne le domaine réseaux de communication de véhicules terrestres à moteur (véhicules particuliers, véhicules utilitaires légers, poids-lourds, autocars, autobus, camping-cars, véhicules de chantier, véhicules agricoles, véhicules militaires, quadricycles, tricycles, motocyclettes, side-cars). L'invention porte en particulier sur un segment de réseau de communication d'un véhicule terrestre à moteur. L'invention s'applique notamment aux véhicules automobiles.

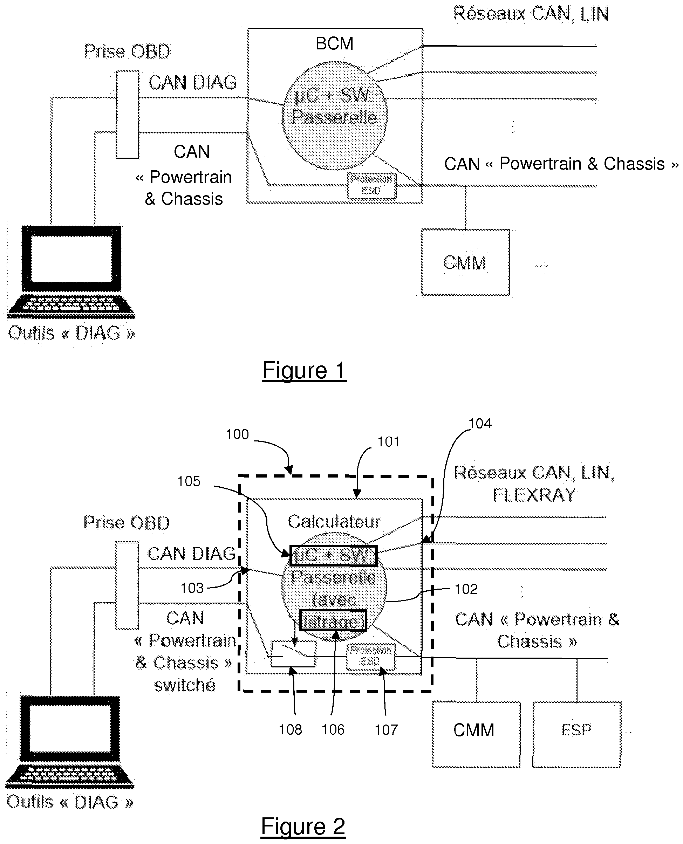

De nos jours, comme illustré sur la figure 1, la majorité des différents réseaux de communication multiplexés embarqués (CAN High Speed, CAN FD (Flexible Data Rate), CAN Low Speed Fault Tolérant, LIN, Flexray) sur un véhicule sont connectés sur un calculateur central BCM (Body Control Module) assurant un rôle de passerelle entre ces réseaux. Cette passerelle intégrée au calculateur central BCM, ou éventuellement déportée dans un calculateur dédié, permet de faire transiter des informations (signaux ou trames) entre différents réseaux de communication embarqués du véhicule, ceux-ci pouvant être de nature différente (ex. : CAN / LIN) ou de vitesse différente (ex. : CAN LSFT (CAN Low Speed Fault Tolérant) à 125 Kbit/s / CAN HS (CAN High Speed) à 500 kbit/s). Par exemple, le régime moteur calculé par le CMM (Calculateur Moteur Multifonctions) situé sur un réseau CAN HS peut être communiqué au combiné situé sur un réseau CAN LSFT pour le pilotage du comptetours via la passerelle.

La passerelle est également connectée à des outils externes, nommés Outils « DIAG » dans la suite du document, via un réseau CAN HS « Diagnostic » (CAN DIAG) et la prise OBD (On Board Diagnosis) afin d'assurer :
- le diagnostic, le télécodage et le téléchargement de celle-ci (en usine ou en après-vente),
- le diagnostic, le télécodage et le téléchargement (en usine ou en après-vente) de certains calculateurs situés sur des réseaux embarqués du véhicule (en particulier côté habitacle) en utilisant les fonctions de passerelle.

Or, en usine, il est nécessaire d'effectuer le téléchargement de certains calculateurs sur la ligne de montage véhicule dans un temps restreint, correspondant à un pas de la ligne, afin de ne pas ralentir le flux de production des véhicules. Les calculateurs qui doivent être téléchargés en ligne sont notamment le calculateur central (BCM), le CMM ou la boîte de vitesse automatique (BVA) qui sont des « gros » calculateurs comportant chacun plusieurs méga-octets de données ainsi que d'autres calculateurs plus « petits ».

Afin d'optimiser la durée de téléchargement, on peut réaliser en parallèle :
- le téléchargement du calculateur central (BCM) ainsi que de « petits » calculateurs habitacle, et
- le téléchargement du CMM.

Pour cela, l'outil « DIAG » possède au moins 2 ports matériels CAN HS, permettant de réaliser en parallèle les téléchargements :
- du calculateur central (BCM), puis de « petits » calculateurs habitacle via la passerelle, via le réseau dédié CAN DIAG qui relie le calculateur central (BCM) à l'outil « DIAG » (liaison point à point) au travers de la prise OBD,
- du CMM via le réseau embarqué CAN HS « Powertrain & Châssis » (réseau « sous capot ») qui est connecté directement au 2ème port de l'outil « DIAG » au travers également de la prise OBD.

Dans les phases de développement et mise au point des nouveaux véhicules, la connexion directe du CAN HS « Powertrain & Chassis » sur la prise OBD ainsi que l'ajout d'un (ou plusieurs) connecteur(s) dédié(s) instrumentation sur le(s)quel(s) sont connectés la plupart des réseaux de communication embarqués du véhicule permettent également de connecter facilement des outils d'instrumentation afin d'espionner les trames circulant sur les réseaux et également de faire des mesures directes des signaux électriques (amplitude des signaux, points d'échantillonnage, etc.).

Cependant, la connexion directe des réseaux embarqués du véhicule sur la prise OBD et sur des connecteurs d'instrumentation, telle que réalisée présente certains inconvénients :
- les branches de ces réseaux connectées à la prise OBD et au(x) connecteur(s) d'instrumentation constituent des « antennes » qui peuvent dégrader la tenue de ces réseaux du point de vue de la compatibilité électromagnétique,
- la prise OBD et le(s) connecteur (s) d'instrumentation constituent, si des protections ne sont pas prévues, des risques de DES (Décharges Electro- Statiques),
- la prise OBD et le(s) connecteur(s) d'instrumentation constituent des risques de panne si un corps étranger électriquement conducteur est introduit entre des broches, et
- en cas de défaillance ou d'utilisation inappropriée de l'outil « DIAG », on peut imaginer que des trames de communication ou des signaux non désiré (e)s soient émis(es) par celui-ci, ce qui pourrait induire une dégradation ou un fonctionnement inapproprié d'un ou plusieurs éléments du réseau.

On connait par le document EP 3 148 236, un réseau embarqué comprenant un port d'interface pour connecter un dispositif externe au réseau embarqué; et une unité de sécurité connectée au réseau embarqué, l'unité de sécurité étant adaptée pour permettre au dispositif externe de communiquer avec le réseau embarqué, via le port d'interface, sur la base d'un jeton de sécurité reçu du dispositif externe.

On connait aussi par le document US2018/026945, un système de passerelle sécurisée évolutive pour un véhicule comprenant une passerelle connectée et une passerelle sécurisée. Le système de passerelle sécurisée évolutive pour véhicule offre une flexibilité pour ajouter et / ou supprimer une ou plusieurs mesures de sécurité particulières en fonction du besoin de la ou des mesures de sécurité particulières.

On connait aussi par le document EP 3 114 817, un procédé pour le téléchargement de données vers au moins un calculateur de véhicule automobile comportant un premier émetteur-récepteur relié à un premier réseau, le calculateur comportant en outre un deuxième émetteur-récepteur relié à un deuxième réseau.

L'invention vise à fournir un procédé pour palier à ces inconvénients.

L'invention a en particulier pour but de fournir un système qui, tout en préservant la durée de téléchargement des calculateurs en usine terminale, en permettant notamment de continuer à réaliser en parallèle le téléchargement du calculateur central (BCM) par le réseau CAN DIAG et le téléchargement de calculateurs du réseau CAN HS « Powertrain & Chassis » (e.g. CMM, BVA), apporte une meilleure sécurisation de certaines parties du réseau de communication d'un véhicule terrestre à moteur contre d'éventuelles trames de communication ou signaux électriques non désiré(e)s qui pourraient être émis(es).

A cet effet, l'invention a pour objet un segment de réseau de communication d'un véhicule terrestre à moteur qui comprend un calculateur, ledit calculateur étant pourvu de moyens d'interface assumant un rôle de passerelle en permettant la transmission de trames de communication et/ou de signaux électriques entre au moins un premier port matériel adapté pour être connecté à au moins un bus de données et un deuxième port matériel adapté pour être connecté à au moins un bus de données, des moyens de calcul assumant au moins un rôle d'authentification en permettant de déterminer un ordre de commande en interprétant au moins une donnée contenue dans une requête d'authentification reçue sur le premier port matériel et des moyens de filtrage adaptés pour empêcher la transmission au travers des moyens d'interface d'au moins une trame de communication non pertinente, ledit segment comprenant en outre au moins un module de protection, adapté pour empêcher la propagation d'une surtension sur au moins une partie dudit segment, et au moins un module de commutation connecté au module de protection et adapté pour prendre une position de transmission autorisant la transmission de trames de communication entre une entrée et une sortie du module de commutation en fonction d'un ordre de commande reçu sur un port matériel de commande connecté au calculateur par l'intermédiaire d'une liaison filaire.

Selon une variante, le calculateur et le module de commutation peuvent être agencés au sein d'un même boîtier.

Selon une autre variante, le module de protection, le calculateur et le module de commutation peuvent être agencés au sein d'un même boîtier.

Selon une autre variante, le module de commutation et le module de protection peuvent être agencés au sein d'un même boîtier.

Selon une autre variante, le module de protection et le calculateur peuvent être agencés au sein d'un premier boîtier alors que le module de commutation peut être agencé au sein d'un deuxième boîtier indépendant.

Selon une autre variante, le module de commutation peut être connecté à un troisième port matériel du calculateur adapté pour être connecté à un bus de données et le module de protection peut être connecté à un quatrième port matériel du calculateur adapté pour être connecté à un bus de données.

Selon une autre variante, le module de protection peut être connecté à un troisième port matériel du calculateur adapté pour être connecté à un bus de données.

Selon une autre variante, le module de commutation peut comprendre deux éléments de commutation commandés par une bobine commune.

L'invention a en outre pour objet un véhicule terrestre à moteur comprenant un segment de réseau tel que décrit ci-dessus.

D'autres caractéristiques et avantages de l'invention apparaîtront à l'examen de la description détaillée ci-après, et des dessins annexés, sur lesquels :
- la figure 1 est un schéma bloc d'un réseau de communication d'un véhicule terrestre à moteur connu de l'état de la technique,
- la figure 2 est un schéma bloc d'un réseau de communication d'un véhicule terrestre à moteur qui comprend un segment de réseau selon un premier mode de réalisation de l'invention,
- la figure 3 est un schéma bloc d'un réseau de communication d'un véhicule terrestre à moteur qui comprend un segment de réseau selon le premier mode de réalisation de l'invention, et
- la figure 4 est un schéma bloc d'un réseau de communication d'un véhicule terrestre à moteur qui comprend un segment de réseau selon un deuxième mode de réalisation de l'invention.

Selon le premier mode de réalisation de l'invention illustré à la figure 2, un réseau de communication d'un véhicule terrestre à moteur est constitué d'une pluralité de sous-réseaux de communication embarqués de différents types, connectés ensemble par l'intermédiaire d'un segment de réseau de communication 100 qui comprend un calculateur central 101.

Le calculateur 101 est agencé au sein d'un boîtier et est pourvu de moyens d'interface 102 assumant un rôle de passerelle en permettant, notamment, la transmission de trames de communication et/ou de signaux électriques entre au moins un premier port matériel 103 et un deuxième port matériel 104. De préférence, les ports matériels 103 et 104 sont adaptés pour être connectés à un bus de données et les sous-réseaux de communication embarqués peuvent être notamment de type CAN High Speed, CAN FD, CAN Low Speed Fault Tolérant, Flexray, LIN, etc.

Le calculateur 101 assurant la fonction de passerelle est également connecté à un ou plusieurs sous-réseaux, notamment par l'intermédiaire du port matériel 103, dédié à l'interface avec des outils permettant :
- le diagnostic, le télécodage et le téléchargement de celui-ci (en usine ou en après-vente),
- le diagnostic, le télécodage et le téléchargement (en usine ou en après-vente) de tous les calculateurs situés sur des sous-réseaux embarqués du véhicule, par exemple en utilisant des fonctions de passerelle qui sont intégrées dans le boot afin de permettre au calculateur d'assurer le téléchargement d'autres calculateurs en même temps que son propre téléchargement,
- le contrôle de conformité du véhicule (contrôle technique, contrôle par la police, Scantool, etc.),
- l'interfaçage « over the air » du véhicule avec des services débarqués (« dongles » avec connexion GSM, ou avec connexion Bluetooth ou WIFI vers le smartphone de l'utilisateur) parfois branchés par l'utilisateur sur la prise OBD (On Board Diagnosis), par exemple dans le cadre de contrats d'assurance prenant en compte le kilométrage parcouru et/ou le type de conduite (« pay as you drive »).

Dans la suite du document, ces outils sont désignés comme les outils « DIAG ». Les sous-réseaux dédiés à l'interface avec ces outils « DIAG » sont traditionnellement de type CAN High Speed et commencent à migrer vers Ethernet (obligatoire à partir de 2023 pour les nouveaux véhicules), ces réseaux sont connectés à la prise OBD (On Board Diagnosis). Dans la suite du document, ils sont désignés comme le « CAN DIAG ».

Le calculateur 101 est de plus pourvu de moyens de calculs 105, regroupant notamment un microcontrôleur et un ou plusieurs éléments logiciels. Comme cela sera explicité plus en détail ci-dessous, le microcontrôleur et les éléments logiciels assument ensemble, entre autres, un rôle d'authentification en permettant notamment de déterminer un ordre de commande sur la base d'une donnée contenue dans une requête d'identification reçue sur le premier port matériel 103.

Le calculateur 101 est en outre pourvu de moyens de filtrage 106 agissant au même titre qu'un pare-feu pour analyser des trames de communication et, éventuellement, empêcher la transmission au travers de la passerelle de trames de communication non-désirées qui seraient reçues au niveau de l'un des ports matériels du calculateur, notamment le premier port matériel 103. Par exemple, les moyens de filtrage 106 peuvent être configurés pour interdire l'écriture par un « dongle » sur les sous-réseaux embarqués du véhicule ou bien limiter celle-ci à des trames autorisées, ne présentant pas de danger potentiel pour le véhicule, ses passagers et les autres usagers de la route (les moyens de filtrage 106 bloquent par exemple la possibilité d'envoyer sur les sous-réseaux embarqués du véhicule des trames de commande d'accélération, de freinage ou d'activation de la direction).

Selon le premier mode de réalisation, le segment de réseau 100 comprend, en outre, agencés au sein du boîtier du calculateur 101, un module de protection 107 et un module de commutation 108.

En effet, afin de réduire le temps de téléchargement en usine des calculateurs ayant les plus grosses tailles mémoires (CMM par exemple) et de permettre l'instrumentation de tout ou partie des sous-réseaux de communication embarqués à des fins de mise au point en phase de développement ou d'industrialisation, le calculateur 101 pilote, sur demande, le module de commutation 108 pour commuter de manière temporaire vers l'outil « DIAG » :
- le principal réseau de communication embarqué du véhicule, généralement le CAN HS « Powertrain & Chassis » (sur lequel se trouvent le CMM, l'ESP, la BVA,...), ou
- alternativement, comme décrit ci-dessus, plusieurs sous-réseaux de communication embarqués (de type CAN High Speed, CAN FD, CAN Low Speed Fault Tolérant, Flexray, LIN, ...), alternativement ou simultanément, selon la connectique utilisée (prise OBD seulement ou connecteurs instrumentation) et selon le nombre et le type de ports de communication disponibles sur l'outil.

Par ailleurs, afin de protéger les réseaux de communication embarqués contre les décharges électro-statiques qui peuvent être générées par les opérateurs lors des branchements ou débranchements des outils, le segment de réseau 100 comprend en outre un module de protection 107 au moins adapté pour empêcher la propagation d'une surtension qui aurait été transmise au travers du module de commutation 108. A cette fin, le module de protection 107 est connecté directement au module de commutation 108 par une liaison filaire.

De préférence, le module de commutation 108 est pourvu de deux éléments de commutation, par exemple des relais électromécaniques ou des commutateurs électroniques (transistor MOS). Dans le cas de relais électromécaniques, on peut envisager l'utilisation d'un relai double comprenant deux éléments de commutation (interrupteurs), assurant chacun la commutation d'une ligne (CAN High et CAN low par exemple), commandés par le biais d'une bobine commune. On peut toutefois envisager d'utiliser deux relais simples.

Tous les éléments décrits ci-dessus agissent conjointement pour mettre en œuvre le procédé suivant.

En mode d'utilisation standard, le(s) élément(s) de commutation du module de commutation 108 est (sont) ouvert(s). Ainsi les risques inhérents à la connexion des sous-réseaux de communication embarqués sur la prise OBD ou sur les connecteurs d'instrumentation sont évités :
- risques accrus en compatibilité électromagnétique par les branches de ces sous-réseaux connectées à la prise OBD et au(x) connecteur(s) d'instrumentation constituant des « antennes »,
- risques accrus de décharges électro-statiques,
- risques de panne si un corps étranger électriquement conducteur est introduit entre des broches
- risques de transmission de trames de communication non-désirées.

Selon une première étape d'un procédé de fonctionnement préféré, l'outil « DIAG » entre en communication avec les moyens de calcul 105 via le sous-réseau CAN DIAG et soumet une requête d'authentification impliquant, de préférence, l'utilisation de fonctionnalités de sécurisation de la communication permettant la mise en œuvre d'échanges cryptés.

Selon une deuxième étape, une fois authentifié comme étant un outil autorisé à accéder aux sous-réseaux de communication embarqués, l'outil « DIAG » demande aux moyens de calculs 105 accès au(x) sous-réseau(x) de communication embarqué(s).

Pour ce faire, selon une troisième étape, le calculateur 101, en utilisant de préférence les moyens de calcul 105, pilote le module de commutation 108 pour connecter le sous-réseau de communication embarqué (CAN « Powertrain & Châssis) à l'outil.

Une fois le module de commutation 108 activé, i.e. lorsque celui-ci reçoit sur un port matériel de commande un ordre de commande qui l'amène à prendre une position de transmission, i.e. une position fermée autorisant la transmission de trames de communication entre son entrée et sa sortie, l'outil a alors un plein accès au sous-réseau de communication embarqué.

En mode téléchargement, il est ainsi possible par exemple de télécharger un CMM sans passer par la passerelle du calculateur central.

En mode instrumentation, l'outil a l'accès direct aux signaux physiques du(des) réseau(x) à espionner (amplitude des signaux, points d'échantillonnage, etc.) .

Sur demande de l'outil via le(s) sous-réseau(x) DIAG à la fin de l'opération, ou en cas de perte de communication avec l'outil via le(s) sous-réseau(x) DIAG ou au bout d'un time-out, le calculateur 101 désactive le module de commutation 108, i.e. les éléments de commutation sont mis dans une position ouverte, interdisant la transmission de trames de communication, et on revient à une configuration correspondant au mode d'utilisation standard.

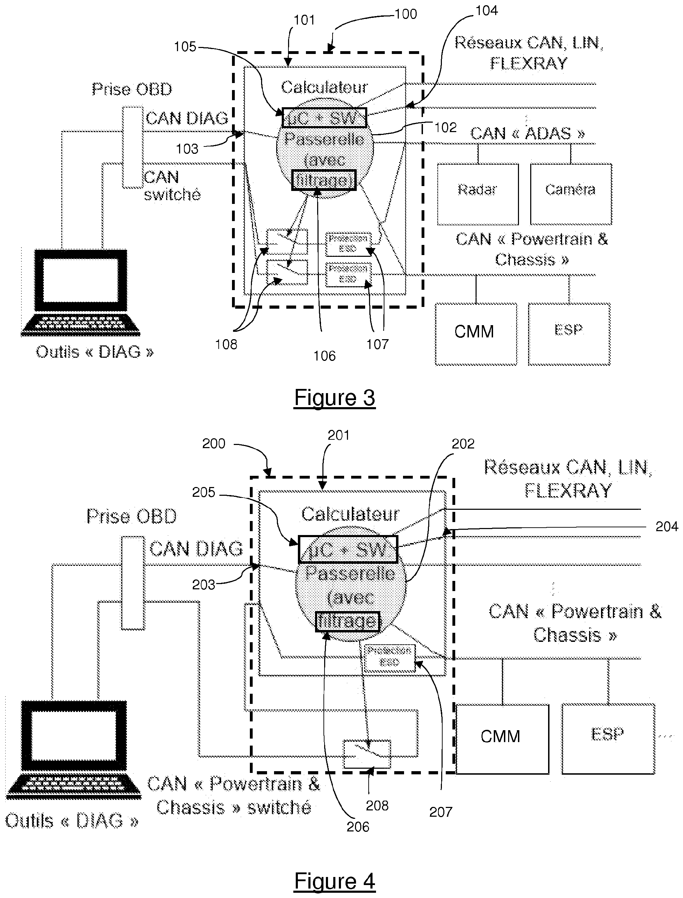

Selon une alternative illustrée à la figure 3, le segment de réseau 100 diffère du segment de réseau décrit ci-dessus par le fait qu'une pluralité de modules de protection 107 et une pluralité de module de commutation 108 sont agencés au sein du boîtier du calculateur 101.

Dans ce cas, le calculateur 101 est configuré pour piloter par l'intermédiaire de ses moyens de calcul 105 chaque module de commutation 108, simultanément, indépendamment et/ou selon un ordonnancement choisi.

Aussi, plusieurs sous-réseaux de communication embarqués (CAN « ADAS », CAN « Powertain & Chassis ») peuvent, chacun à leur tour ou simultanément, selon la connectique utilisée (prise OBD seulement ou connecteurs instrumentation) et selon le nombre et le type de ports matériels disponibles sur l'outil, être connectés à ce dernier. Le procédé mis en œuvre est alors sensiblement identique que celui décrit ci-dessus, à la différence qu'il devient possible pour l'outil « DIAG » de requérir accès à l'un des sous-réseaux indépendamment des autres.

Selon un deuxième mode de réalisation de l'invention illustrée à la figure 4, le segment de réseau 200 comprend un calculateur 201, agencé au sein d'un boitier, qui est pourvu de moyens d'interface 202 similaires aux moyens d'interface 102 et assumant également un rôle de passerelle en permettant, notamment, la transmission de trames de communication et/ou de signaux électriques entre au moins un premier port matériel 203 et un deuxième port matériel 204. De préférence, les ports matériels 203 et 204 sont aussi adaptés pour être connectés à un bus de données. Le calculateur 201 assurant la fonction de passerelle est également connecté à un ou plusieurs sous-réseaux, notamment par l'intermédiaire du port matériel 203.

Comme précédemment, le calculateur 201 est de plus pourvu de moyens de calculs 205, regroupant notamment un microcontrôleur et un ou plusieurs éléments logiciels. Ici encore, le microcontrôleur et les éléments logiciels assument ensemble, entre autres, un rôle d'authentification en permettant notamment de déterminer un (ou plusieurs) ordre(s) de commande sur la base d'une donnée contenue dans une requête d'identification reçue sur le premier port matériel 203.

Comme précédemment, le calculateur 201 est en outre pourvu de moyens de filtrage 206 agissant au même titre qu'un pare-feu pour analyser des trames de communication et, éventuellement, empêcher la transmission au travers de la passerelle de trames de communication non-désirées qui seraient reçues au niveau de l'un des ports matériels du calculateur, notamment le premier port matériel 203. Ici encore, les moyens de filtrage 206 peuvent être configurés pour interdire l'écriture par un « dongle » sur les réseaux embarqués véhicule ou bien limiter celle-ci à des trames autorisées, ne présentant pas de danger potentiel pour le véhicule, ses passagers et les autres usagers de la route (les moyens de filtrage 206 bloquent par exemple la possibilité d'envoyer sur les réseaux embarqués du véhicule des trames de commande d'accélération, de freinage ou d'activation de la direction).

Le segment de réseau 200 selon le deuxième mode de réalisation se distingue par le fait que le module de commutation 208 est agencé dans un boîtier indépendant-Dans ce cas, le module de commutation 208 est connecté au calculateur 201 au niveau d'un troisième port matériel, distinct du premier port matériel 203 et du deuxième port matériel 204, auquel est, de préférence, connecté un module de protection 207 agencé au sein du boîtier du calculateur 201 et assumant le même rôle que le module de protection 107 décrit ci-dessus. Dans ce cas, le module de protection est connecté à un sous-réseau de communication par l'intermédiaire d'un quatrième port matériel du calculateur 201.

Comme précédemment, de préférence, le module de commutation 208 est pourvu de deux éléments de commutation, par exemple des relais électromécaniques ou des commutateurs électroniques (transistor MOS). Dans le cas de relais électromécaniques, on peut envisager l'utilisation d'un relais double comprenant deux éléments de commutation (interrupteurs), assurant chacun la commutation d'une ligne (CAN High et CAN low par exemple), commandés par le biais d'une bobine commune. On peut toutefois envisager également d'utiliser deux relais simples.

Selon une première alternative, le module de protection 207 n'est pas agencé dans le même boîtier que le calculateur mais dans le même boîtier que le module de commutation 208.

Selon une deuxième alternative, le segment de réseau 200 comprend une pluralité de module de commutation 207 agencés au sein d'un boîtier indépendant. Au choix, un ou plusieurs modules de protection 207 sont agencés dans le boîtier du calculateur 201 ou dans le boîtier des modules de commutation 208 pour être, chacun, connectés à un module de commutation 208. Dans ce cas, tous les modules de commutation 208 sont identiques et partagent les caractéristiques décrites ci-dessus.

Comme précédemment, tous ces éléments contribuent pour la mise en œuvre de procédés sensiblement similaires que ceux décrits en référence au premier mode de réalisation de l'invention. Ainsi, suite à la mise en œuvre des étapes d'authentification, l'outil « DIAG » gagne accès à un (des) sous-réseau(x) embarqué(s) par l'intermédiaire du (des) module(s) de commutation 208 en fonction d'un (des) ordre(s) de commande reçu(s) sur un (des) port matériel de commande.

Les segments de réseaux 100, 200 selon l'invention permettent de :
- préserver la durée de téléchargement des calculateurs en usine terminale en permettant de continuer à réaliser en parallèle :
   o Le téléchargement du calculateur central (BCM) par le réseau CAN DIAG,
   o le téléchargement de calculateurs du réseau CAN HS « Powertrain & Chassis » (CMM, BVA, ...), sans passer par la passerelle,
- préserver la possibilité d'instrumenter facilement le CAN HS « Powertrain & Chassis », réseau utilisé par de nombreux calculateurs (BCM, CMM, BVA, ESP, DAE (Direction Assistée Électrique), etc.), lors du développement ou dans les phases de présérie en usine, en connectant des outils sur la prise OBD ou sur un connecteur dédié,
- améliorer la sécurité en ne permettant l'accès aux sous-réseaux seulement aux outils authentifiés et en filtrant les trames de communication pour discriminer d'éventuelles trames de communication non-désirées,
- conserver un accès physique aux réseaux pour l'instrumentation (permettant de lire directement les signaux physiques, sans aucun décalage temporaire),
- télécharger des calculateurs situés sur les réseaux commutés (CAN HS « Powertrain & Châssis » notamment) sans aucun temps de transfert, et,
- minimiser, selon certains modes de réalisation, l'impact sur le dimensionnement du microcontrôleur du claculateur central (BCM).

L'invention ne se limite pas aux modes de réalisations et alternatives décrits ci-dessus qui ne sont évoqués qu'à titre d'exemple. On peut effet combiner certaines caractéristiques décrites relativement à l'un des modes de réalisation avec d'autres caractéristiques décrites en référence à d'autres modes de réalisation pour envisager des modes de réalisations supplémentaires qui tombent sous la portée des revendications.

## Revendications

1. Segment de réseau de communication d'un véhicule terrestre à moteur (100, 200), **caractérisé en ce qu'**il comprend un calculateur (101, 201), ledit calculateur étant pourvu de moyens d'interface (102, 202) assumant un rôle de passerelle en permettant la transmission de trames de communication et/ou de signaux électriques entre au moins un premier port matériel (103, 203) adapté pour être connecté à au moins un bus de données et un deuxième port matériel (104, 204) adapté pour être connecté à au moins un bus de données, des moyens de calcul (105, 205) assumant au moins un rôle d'authentification en permettant de déterminer un ordre de commande en interprétant au moins une donnée contenue dans une requête d'authentification reçue sur le premier port matériel et des moyens de filtrage (106, 206) adaptés pour empêcher la transmission au travers des moyens d'interface d'au moins une trame de communication non pertinente, ledit segment comprenant en outre au moins un module de protection (107, 207), adapté pour empêcher la propagation d'une surtension sur au moins une partie dudit segment, et au moins un module de commutation (108, 208) connecté au module de protection et adapté pour prendre une position de transmission autorisant la transmission de trames de communication entre une entrée et une sortie du module de commutation en fonction d'un ordre de commande reçu sur un port matériel de commande connecté au calculateur par l'intermédiaire d'une liaison filaire.

2. Segment de réseau selon la revendication 1, **caractérisé en ce que** le calculateur et le module de commutation sont agencés au sein d'un même boîtier.

3. Segment de réseau selon la revendication 1, **caractérisé en ce que** le module de protection, le calculateur et le module de commutation sont agencés au sein d'un même boîtier.

4. Segment de réseau selon la revendication 1, **caractérisé en ce que** le module de commutation et le module de protection sont agencés au sein d'un même boîtier.

5. Segment de réseau selon la revendication 1, **caractérisé en ce que** le module de protection et le calculateur sont agencés au sein d'un premier boîtier alors que le module de commutation est agencé au sein d'un deuxième boîtier indépendant.

6. Segment de réseau selon la revendication 3, **caractérisé en ce que** le module de commutation est connecté à un troisième port matériel du calculateur adapté pour être connecté à un bus de données et le module de protection est connecté à un quatrième port matériel du calculateur adapté pour être connecté à un bus de données.

7. Segment de réseau selon la revendication 5, **caractérisé en ce que** le module de protection est connecté à un troisième port matériel du calculateur adapté pour être connecté à un bus de données.

8. Segment de réseau de communication selon l'une des revendications précédentes, **caractérisé en ce que** les moyens d'interface sont connectés au module de protection.

9. Segment de réseau selon l'une des revendications précédentes, **caractérisé en ce que** le module de commutation comprend deux éléments de commutation commandés par une bobine commune.

10. Véhicule terrestre à moteur, **caractérisé en ce qu'**il comprend un segment de réseau selon l'une des revendications précédentes.

## Patentansprüche

1. Kommunikationsnetzwerksegment eines motorisierten Landfahrzeugs (100, 200), **dadurch gekennzeichnet, dass** es einen Rechner (101, 201) umfasst, wobei der Rechner mit Schnittstellenmitteln (102, 202) versehen ist, die eine Gateway-Rolle übernehmen, indem sie die Übertragung von Kommunikationsrahmen und/oder elektrischen Signalen zwischen mindestens einem ersten Hardware-Port (103, 203), der geeignet ist, mit mindestens einem Datenbus verbunden zu werden, und einem zweiten Hardware-Port (104, 204), der geeignet ist, mit mindestens einem Datenbus verbunden zu werden, Berechnungsmitteln (105, 205), die mindestens eine Authentifizierungsrolle übernehmen, indem sie die Bestimmung eines Steuerbefehls durch Interpretation mindestens eines in einer am ersten Hardware-Port empfangenen Authentifizierungsanfrage enthaltenen Datenwerts ermöglichen, und Filtermitteln (106, 206), die geeignet sind, die Übertragung durch die Schnittstellenmittel von mindestens einem nicht relevanten Kommunikationsrahmen zu verhindern, wobei das Segment außerdem mindestens ein Schutzmodul (107, 207), das geeignet ist, die Ausbreitung einer Überspannung über mindestens einen Teil des Segments zu verhindern, und mindestens ein Schaltmodul (108, 208), das mit dem Schutzmodul verbunden und so beschaffen ist, dass es eine Übertragungsposition einnimmt, die die Übertragung von Kommunikationsrahmen zwischen einem Eingang und einem Ausgang des Schaltmoduls in Abhängigkeit von einem Steuerbefehl zulässt, der an einem Steuerhardwareanschluss empfangen wird, der über eine Drahtverbindung mit dem Rechner verbunden ist.

2. Netzwerksegment nach Anspruch 1, **dadurch gekennzeichnet, dass** der Rechner und das Schaltmodul innerhalb eines einzigen Gehäuses angeordnet sind.

3. Netzwerksegment nach Anspruch 1, **dadurch gekennzeichnet, dass** das Schutzmodul, der Rechner und das Schaltmodul in einem einzigen Gehäuse angeordnet sind.

4. Netzwerksegment nach Anspruch 1, **dadurch gekennzeichnet, dass** das Schaltmodul und das Schutzmodul innerhalb desselben Gehäuses angeordnet sind.

5. Netzwerksegment nach Anspruch 1, **dadurch gekennzeichnet, dass** das Schutzmodul und der Rechner innerhalb eines ersten Gehäuses angeordnet sind, während das Schaltmodul innerhalb eines zweiten, unabhängigen Gehäuses angeordnet ist.

6. Netzwerksegment nach Anspruch 3, **dadurch gekennzeichnet, dass** das Schaltmodul mit einem dritten Hardware-Port des Rechners verbunden ist, der für den Anschluss an einen Datenbus geeignet ist, und das Schutzmodul mit einem vierten Hardware-Port des Rechners verbunden ist, der für den Anschluss an einen Datenbus geeignet ist.

7. Netzwerksegment nach Anspruch 5, **dadurch gekennzeichnet, dass** das Schutzmodul mit einem dritten Hardware-Port des Steuergeräts verbunden ist, der zur Verbindung mit einem Datenbus geeignet ist.

8. Kommunikationsnetzwerksegment nach einem der vorhergehenden Ansprüche, **dadurch gekennzeichnet, dass** die Schnittstellenmittel mit dem Schutzmodul verbunden sind.

9. Netzwerksegment nach einem der vorhergehenden Ansprüche, **dadurch gekennzeichnet, dass** das Schaltmodul zwei Schaltelemente umfasst, die durch eine gemeinsame Spule gesteuert werden.

10. Motorisiertes Landfahrzeug, **dadurch gekennzeichnet, dass** es ein Netzwerksegment nach einem der vorhergehenden Ansprüche umfasst.

## Claims

1. A communication network segment of a land motor vehicle (100, 200), **characterized in that** it comprises a computer (101, 201), said computer being provided with interface means (102, 202) assuming a gateway role by allowing the transmission of communication frames and/or electrical signals between at least a first hardware port (103, 203) adapted to be connected to at least one data bus and a second hardware port (104, 204) adapted to be connected to at least one data bus, computing means (105, 205) assuming at least an authentication role by allowing a control command to be determined by interpreting at least one data item contained in an authentication request received on the first hardware port, and filtering means (106, 206) adapted to prevent the transmission through the interface means of at least one irrelevant communication frame, said segment further comprising at least one protection module (107, 207), adapted to prevent the propagation of an overvoltage on at least a part of said segment, and at least one switching module (108, 208) connected to the protection module and adapted to assume a transmission position allowing the transmission of communication frames between an input and an output of the switching module according to a control command received on a control hardware port connected to the computer via a wire link.

2. The network segment of claim 1, **characterised in that** the computer and the switching module are arranged within a single housing.

3. The network segment according to claim 1, **characterized in that** the protection module, the computer and the switching module are arranged within the same housing.

4. The network segment according to claim 1, **characterized in that** the switch module and the protection module are arranged within the same housing.

5. The network segment of claim 1, wherein the protection module and the computer are arranged within a first housing while the switching module is arranged within a second independent housing.

6. The network segment of claim 3, **characterised in that** the switch module is connected to a third hardware port of the computer adapted to be connected to a data bus and the protection module is connected to a fourth hardware port of the computer adapted to be connected to a data bus.

7. The network segment of claim 5, wherein the protection module is connected to a third hardware port of the computer adapted to be connected to a data bus.

8. A communication network segment according to any of the preceding claims, **characterised in that** the interface means is connected to the protection module.

9. The network segment according to any of the preceding claims, **characterised in that** the switching module comprises two switching elements controlled by a common coil.

10. Motorized land vehicle, **characterized in that** it comprises a network segment according to one of the preceding claims.
